Europäisches Patentamt

European Patent Office

Office européen des brevets

(11) Veröffentlichungsnummer: **0 310 937**
**A2**

## (12) EUROPÄISCHE PATENTANMELDUNG

(21) Anmeldenummer: **88116042.8**

(51) Int. Cl.⁴: **B23Q 3/10**

(22) Anmeldetag: **29.09.88**

(30) Priorität: **09.10.87 DE 8713569 U**

(43) Veröffentlichungstag der Anmeldung:
**12.04.89 Patentblatt 89/15**

(84) Benannte Vertragsstaaten:
**AT BE CH DE FR GB IT LI NL SE**

(71) Anmelder: **PEHAC WERKZEUGMASCHINEN GMBH**
**Lockenfeld 2**
**D-5277 Marienheide-Kalsbach(DE)**

(72) Erfinder: **Serve, Hermann**
**Gimborner Strasse 7**
**D-5277 Marienheide(DE)**
Erfinder: **Pflitsch, Hans-Jörg**
**Oberthstrasse 10**
**D-5270 Gummersbach(DE)**

(74) Vertreter: **Patentanwälte Dipl.-Ing. W. Dahlke**
**Dipl.-Ing. H.-J. Lippert**
**Frankenforster Strasse 137**
**D-5060 Bergisch Gladbach 1(DE)**

(54) Spannkörper zur Befestigung von zu bearbeitenden Werkstücken.

(57) Ein Spannkörper (1) zur Befestigung von zu bearbeitenden Werkstücken besteht aus einer rechteckigen, gelochten Grundplatte (2), zumindest zwei zur Grundplatte (2) senkrecht angeordneten rechteckigen, gelochten Seitenplatten (3) zur Aufnahme der Werkstücke und zumindest zwei gelochten Quadern (4) zur Verbindung der Seitenplatten (3) mit der Grundplatte (2) und/oder zur Verbindung der Seitenplatten (3) miteinander und aus Verbindungselementen (8), die durch Löcher (5) der Platten und ihnen zugeordnete Löcher (6) der Quader hindurchragen.

Fig. 1

EP 0 310 937 A2

## Spannkörper zur Befestigung von zu bearbeitenden Werkstücken

Die Erfindung betrifft einen Spannkörper zur Befestigung von zu bearbeitenden Werkstücken.

Zum Bearbeiten von Werkstücken mit beispielsweise Koordinatenfräsmaschinen, Mehrspindelbohrwerken oder Schleifmaschinen ist es erforderlich, die Werkstücke zur genauen Positionierung und sicheren Halterung an Spannkörpern festzuspannen, damit die Maschinen die Bearbeitung der Werkstücke innerhalb der gewünschten engen Toleranzen durchführen können. Dazu werden die Werkstücke nach dem Stand der Technik in größerer Stückzahl auf unterschiedlich geformten gelochten Grundkörpern befestigt. Da die Lochung zur Aufnahme der Werkstücke gewöhnlich rasterförmig ausgebildet ist, befinden sich die zu bearbeitenden Werkstücke im gleichen Abstand voneinander, so daß die meistens numerisch gesteuerten Maschinen die Arbeitsvorgänge an der Vielzahl der Werkstücke automatisch, ohne weitere manuelle Steuerung der Maschine, nacheinander durchführen können.

Je nach Art der zu bearbeitenden Werkstücke ist es dabei bisher erforderlich, unterschiedliche Spannkörper, z.B. Würfel, Quader oder Hohlkörper zur Befestigung der Werkstücke einzusetzen. Dadurch ist bei den Betrieben eine teure und umständliche Lagerhaltung erforderlich.

Es ist daher die Aufgabe der vorliegenden Erfindung, einen Spannkörper mit Lochungen zu schaffen, der zur Aufnahme verschiedenartiger Werkstücke, ggfs. auch in verschiedener Anordnung, verwendet werden kann.

Diese Aufgabe wird dadurch gelöst, daß der Spannkörper aus einer rechteckigen, gelochten Grundplatte, zumindest zwei zur Grundplatte senkrecht angeordneten rechteckigen, gelochten Seitenplatten zur Aufnahme der Werkstücke und zumindest zwei gelochten Quadern zur Verbindung der Seitenplatten mit der Grundplatte und/oder zur Verbindung der Seitenplatten miteinander und aus Verbindungselementen besteht, die durch Löcher der Platten und ihnen zugeordnete Löcher der Quader hindurchragen.

Mittels der gelochten Quader und der Seitenplatten ist es möglich, eine Vielzahl unterschiedlicher Spannkörper, die unterschiedliche Werkstücke tragen können, in einfacher Weise herzustellen.

Die Quader sind dabei vorzugsweise als Würfel ausgebildet, die auf ihren Seitenflächen eine gleichartige Lochung aufweisen und bezüglich ihrer Kantenlängen und ihrer Lochung vorzugsweise untereinander identisch sind. Sie sind vorzugsweise an gegenüberliegenden Ecken im Inneren des Spannkörpers angeordnet.

Beim Einsatz von vier Seitenplatten ist der Spannkörper vorzugsweise kastenförmig ausgebildet, wobei die Seitenplatten auf der Grundplatte aufstehen oder sie umschließen können.

Bei einer kastenförmigen Ausbildung des Spannkörpers ist es möglich, im Inneren zusätzlich eine Zwischenplatte zur Aufnahme von Zusatzhalterungen anzubringen.

Bei Verwendung von zwei gelochten Seitenplatten weist der zusammengesetzte Spannkörper eine Scheibenform auf. Die Würfel sind dabei mit den Befestigungselementen vorzugsweise an den Ecken der Seitenplatten zwischen diesen montiert; es ist jedoch auch möglich, zur Verstärkung weitere Würfel an der Außenseite der Seitenplatten derart zu befestigen, daß eine zusätzliche Verstärkung erfolgt. Außerdem können die Seitenplatten auch versetzt auf der Grundplatte angeordnet sein.

Die Erfindung ist in der Zeichnung beispielsweise veranschaulicht und wird nachstehend im einzelnen anhand der Zeichnung beschrieben. Es zeigen

Fig. 1 eine teilweise aufgebrochene Ansicht eines kastenförmigen Spannkörpers mit umschlossener Grundplatte,

Fig. 2 eine teilweise aufgebrochene Ansicht eines abgewandelten kastenförmigen Spannkörpers mit auf die Grundplatte aufgesetzten Seitenplatten,

Fig. 3 eine teilweise aufgebrochene Ansicht eines weiteren kastenförmigen Spannkörpers mit versetzt angeordneten Seitenplatten,

Fig. 4 eine teilweise aufgebrochene Ansicht eines kastenförmigen Spannkörpes gemäß Fig. 2 mit zusätzlicher Zwischenplatte,

Fig. 5 eine teilweise aufgebrochene Ansicht eines plattenförmigen Spannkörpers mit zwei Seitenplatten,

Fig. 6 eine teilweise aufgebrochene Ansicht eines plattenförmigen Spannkörpers mit zwei Seitenplatten und zusätzlichem, außen liegendem Würfel und

Fig. 7 einen plattenförmigen Spannkörper mit zwei versetzt angeordneten Platten.

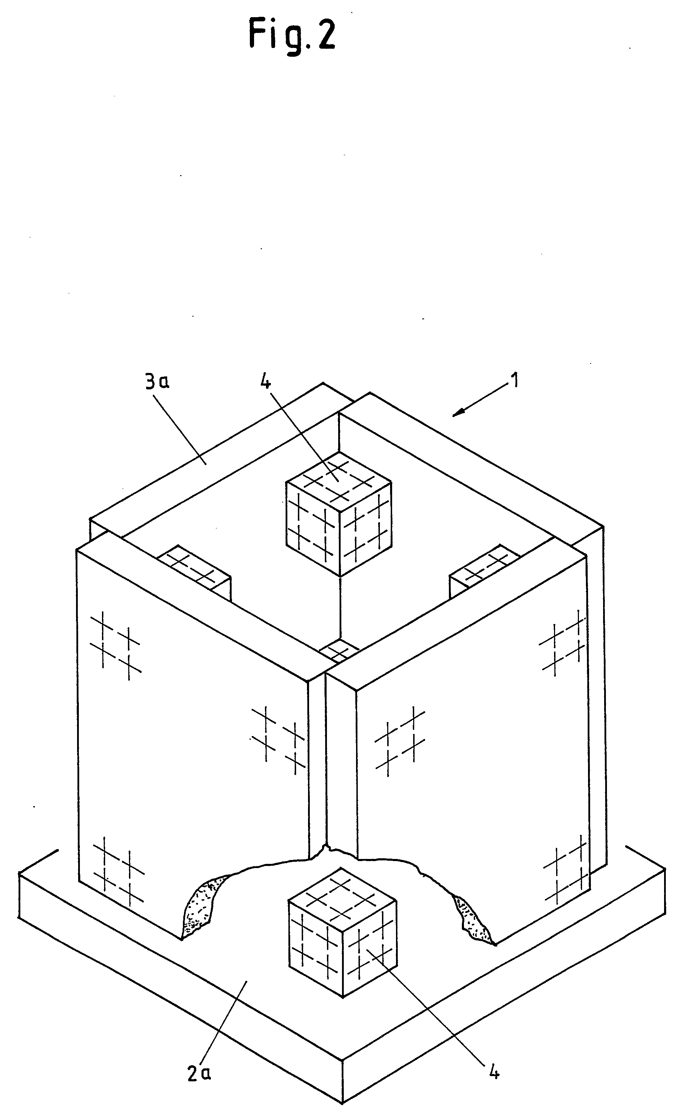

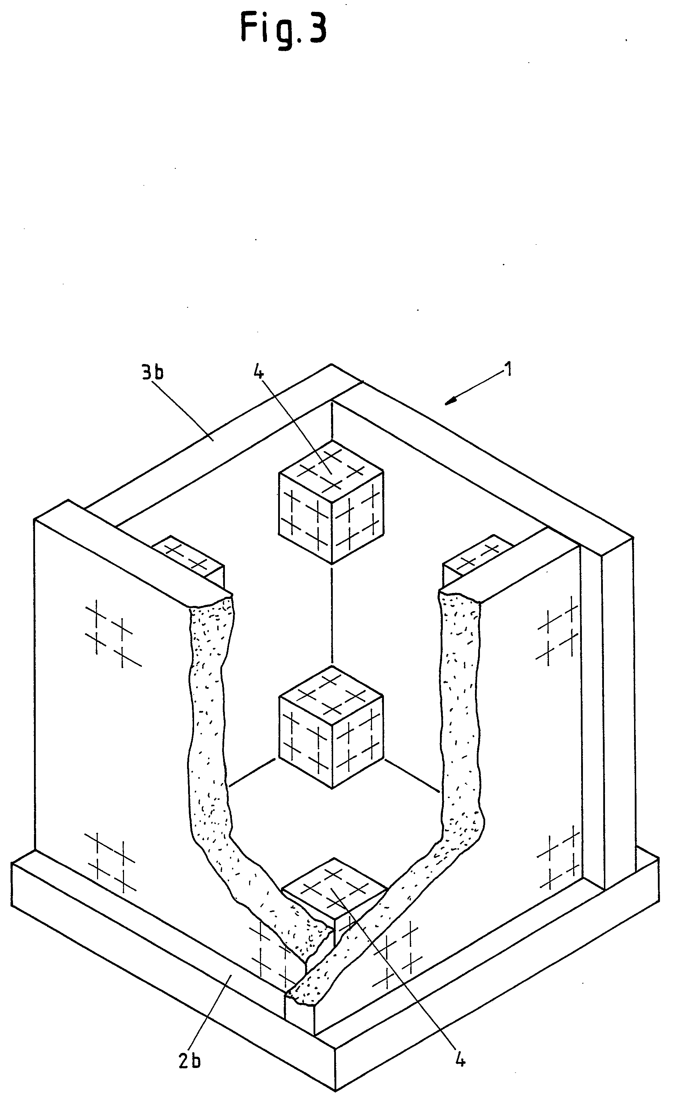

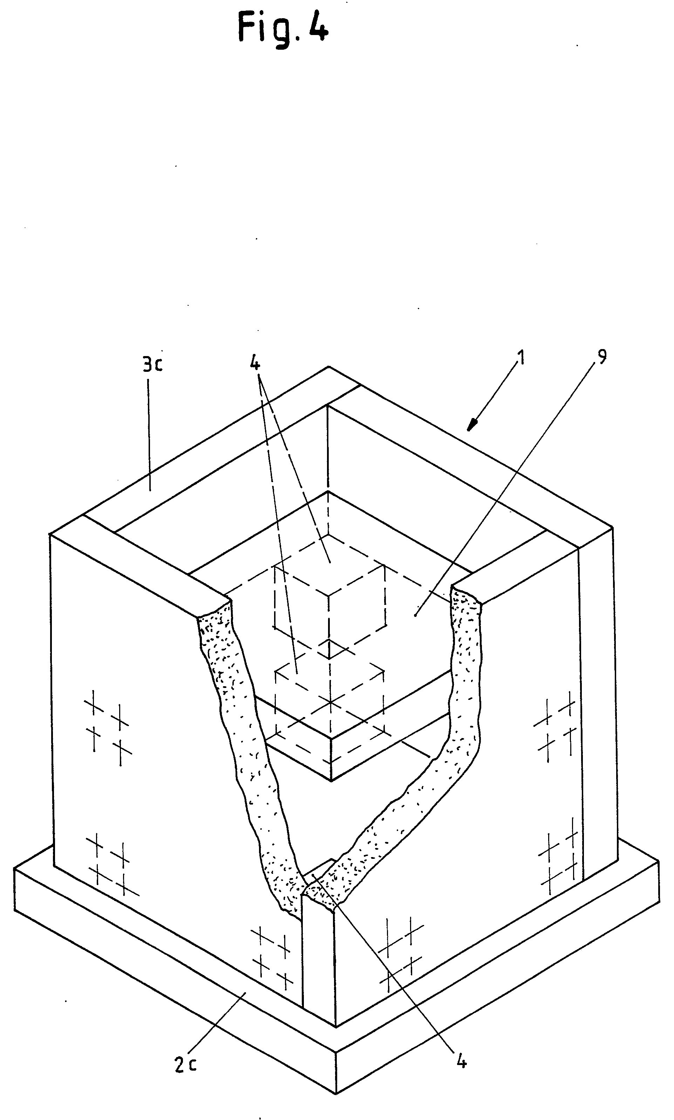

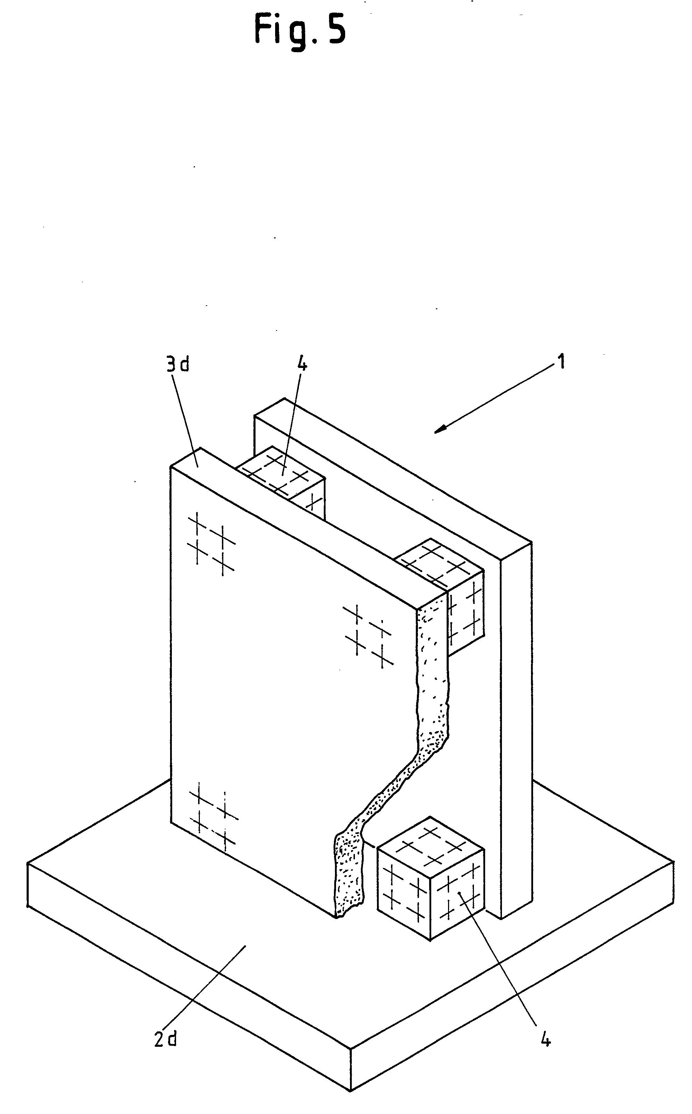

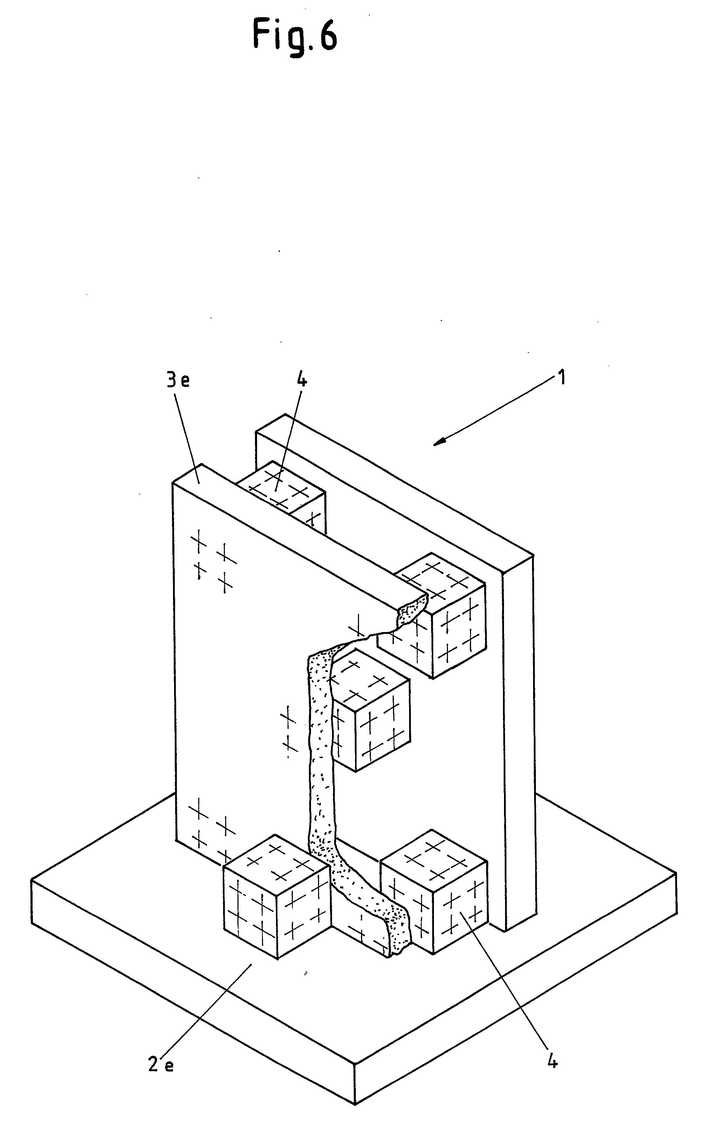

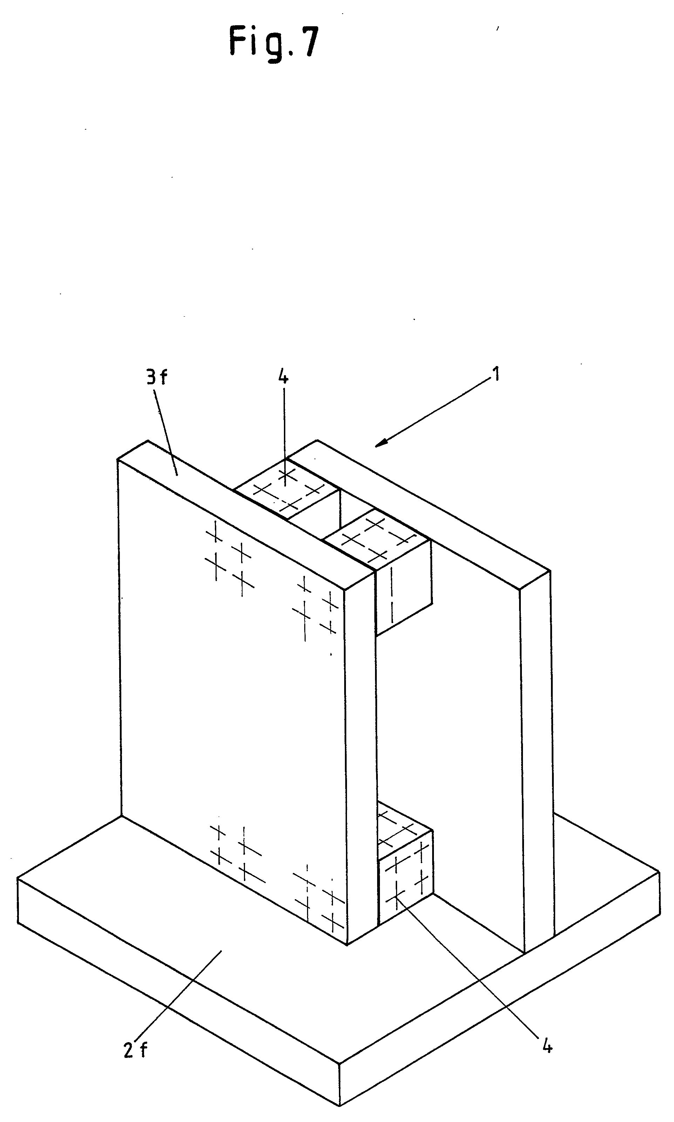

Da die Seitenplatten 3 und die Grundplatte 2 bei den dargestellten einzelnen Ausbildungen der Spannkörper unterschiedliche Lochungen aufweisen können, sind sie in der Fig. 2 mit den Indices a, in Fig. 3 mit b, in Fig. 4 mit c, in Fig. 5 mit d, in Fig. 6 mit e und in Fig. 7 mit f versehen.

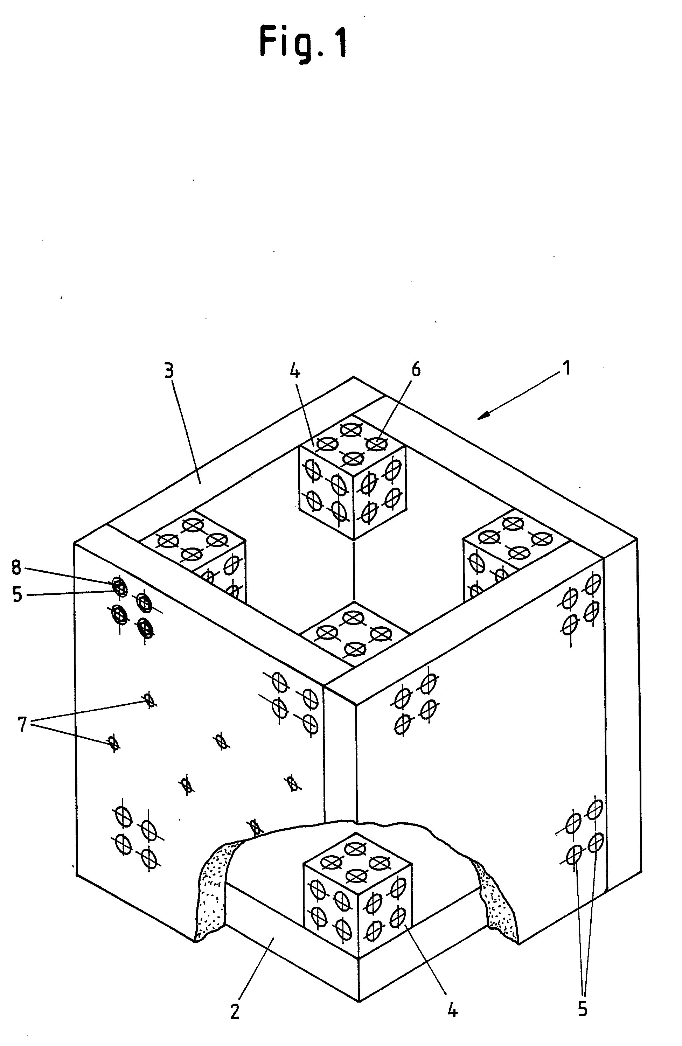

In Fig. 1 sind in perspektivischer und teilweise aufgebrochener Darstellung alle wesentlichen Elemente des erfindungsgemäßen Spannkörpers 1 dargestellt. Die an einer Grundplatte 2 montierten Seitenplatten 3 sind mit Hilfe von acht Würfeln 4 untereinander und mit der Grundplatte 2 verbunden. Die Würfel 4 sind dabei auf jeder Seitenfläche mit vier Bohrungen 6 versehen und durch Befestigungselemente 8, die durch Bohrungen 5 der Seitenplatten 3 hindurchragen, mit diesen und mit der Grundplatte 2 verbunden. Die Befestigungselemente 8 sind entweder Schrauben, die direkt in Gewindebohrungen im Würfel eingeschraubt werden. Man kann aber auch zunächst Paßstifte, die mit Gewindebohrungen versehen sind, in die dann glatten Bohrungen im Würfel einsetzen und die Schrauben dann in die Paßstifte einschrauben. Die Würfel 4 sind an den jeweiligen Ecken des Raumes im Inneren desselben angeordnet. Die Seitenplatten 3 weisen ferner Bohrungen 7 zur Aufnahme von zu bearbeitenden Werkstücken auf (nicht dargestellt).

In Fig. 2 wird eine ähnliche Ausbildung des Spannkörpers 1 gezeigt, wobei jedoch die Seitenplatten 3a auf der Grundplatte 2a aufstehen. Die Bohrungen 5 in den Seitenplatten 3a zur Aufnahme der Befestigungselemente 8 sowie die Bohrungen 7 zur Aufnahme der zu bearbeitenden Werkstücke sind bei dieser Darstellung und den Fig. 3 bis 7 aus Gründen der Vereinfachung weggelassen worden.

Fig. 3 zeigt ebenfalls eine kastenförmige Bauweise des Spannkörpers 1, wobei die Seitenplatten 3b versetzt angeordnet sind und die zur Montage dienenden Würfel 4 im Inneren, an jeweils acht gegenüberliegenden Ecken des Kastens, angeordnet sind.

In Fig. 4 wird ein Spannkörper in einer der Fig. 2 entsprechenden Kastenform gezeigt, wobei die oberen Würfel 4 eine zusätzliche Zwischenplatte 9 tragen, die von den Seitenplatten 3c umschlossen wird. Die Zwischenplatte 9 kann zur Aufnahme weiterer Werkstücke dienen.

Fig. 5 stellt eine scheibenförmige Ausbildung des Spannkörpers dar, wobei zwei Seitenplatten 3d senkrecht auf einer Grundplatte 2d montiert sind. An den vier gegenüberliegenden Ecken der zueinander parallel verlaufenden Seitenplatten 3d im Inneren des Spannkörpers 1 befinden sich vier Würfel 4.

In Fig. 6 ist ein scheibenförmiger Spannkörper 1 ähnlich dem in Fig. 5 dargestellt, wobei zusätzlich im Inneren des Spannkörpers 1 ein mittig angeordneter Würfel 4 eine Verstärkung bildet und ein zwischen Grundplatte 2e und Seitenplatte 3e angeordneter Würfel 4 auf der Außenseite eine zusätzliche äußere Verstärkung bewirkt.

In Fig. 7 ist ebenfalls ein scheibenförmiger Spannkörper 1 mit zwei senkrecht auf der Grundplatte 2f angeordneten Seitenplatten 3f zu sehen. Die Seitenplatten 3f sind jedoch versetzt angeordnet und werden von vier Würfeln 4, die sich an den Ecken der einander gegenüberliegenden Seiten befinden, gehalten.

Es ist klar, daß entsprechend den Montagemöglichkeiten mit den Würfeln 4 eine große Anzahl abgewandelter Spannkörper 1 gebildet werden kann, die für jedes zu bearbeitende Werkstück die passende Halterung bilden. Dabei können die Seitenplatten 3 mit zusätzlichen Bohrungen versehen werden. Man kann auch Zentriervorrichtungen oder spezielle Halterungen für die Werkstücke auf die Seitenplatten 3 aufschrauben.

## Bezugszeichenliste

- 1 Spannkörper
- 2 Grundplatte
- 3 Seitenplatten
- 4 Würfel
- 5 Bohrungen
- 6 Bohrungen
- 7 Bohrungen
- 8 Befestigungselemente
- 9 Zwischenplatte

## Ansprüche

1. Spannkörper zur Befestigung von zu bearbeitenden Werkstücken, **dadurch gekennzeichnet**, daß er aus einer rechteckigen, gelochten Grundplatte (2), zumindest zwei zur Grundplatte (2) senkrecht angeordneten rechteckigen, gelochten Seitenplatten (3) zur Aufnahme der Werkstücke und zumindest zwei gelochten Quadern (4) zur Verbindung der Seitenplatten (3) mit der Grundplatte (2) und/oder zur Verbindung der Seitenplatten (3) miteinander und aus Verbindungselementen (8) besteht, die durch Löcher (5) der Platten und ihnen zugeordnete Löcher (6) der Quader hindurchragen.

2. Spannkörper nach Anspruch 1, **dadurch gekennzeichnet**, daß die Quader (4) bezüglich ihrer Kantenlängen und Lochung untereinander identisch sind.

3. Spannkörper nach Anspruch 2, **dadurch gekennzeichnet**, daß die Quader Würfel sind, deren Seitenflächen eine gleichartige Lochung aufweisen.

4. Spannkörper nach Anspruch 1 bis 3, **dadurch gekennzeichnet**, daß er vier Seitenplatten (3) aufweist und kastenförmig ausgebildet ist, wobei die gegenüberliegenden Seitenplatten (3) parallel und die benachbarten Seitenplatten (3) senkrecht zueinander angeordnet sind.

5. Spannkörper nach Anspruch 4, **dadurch gekennzeichnet**, daß in seinem Inneren zumindest eine Zwischenplatte (9), parallel zur Grundplatte (2), angeordnet ist.

6. Spannkörper nach Anspruch 1 bis 3, **dadurch gekennzeichnet**, daß er zwei Seitenplatten (3) aufweist und scheibenförmig ausgebildet ist, wobei die Seitenplatten (3) parallel zueinander und senkrecht zur Grundplatte (2) angeordnet sind.

7. Spannvorrichtung nach Anspruch 1 bis 6, **dadurch gekennzeichnet**, daß die zur Befestigung der Werkstücke vorgesehenen Löcher (7) der Seitenplatten (3) gleiche Abstände in Längs- und/oder Querrichtung aufweisen.

# Fig.1

# Fig.2

# Fig.3

# Fig.4

# Fig.5

# Fig.6

# Fig.7